# EUROPEAN PATENT APPLICATION

(11) **EP 4 510 309 A1**
(43) Date of publication of application: **19.02.2025**
(21) Application number: 24772546.8
(22) Date of filing: 24.06.2024
(51) Int. Cl.: H01M 10/613

(54) **COOLING FLOW CHANNEL STRUCTURE, LIQUID COOLING PLATE, AND BATTERY SYSTEM**

(30) Priority: 28.06.2023 CN 202310777273; 28.06.2023 CN 202321668701 U
(71) Applicant: Eve Energy Co. Ltd., Huizhou, Guangdong 516000 (CN)
(72) Inventor: WANG, Yuanyuan, Guangdong 516000 (CN); LU, Huajun, Guangdong 516000 (CN); YAN, Shiwei, Guangdong 516000 (CN)
(74) Representative: Petraz, Gilberto Luigi
(86) International application number: PCT/CN2024/100905
(87) International publication number: WO 2025/002041

(57) **Abstract**

Disclosed in the present application is a cooling pipe structure, a liquid cooling plate, and a battery system, including: a cooling pipe set, in which the cooling pipe set includes at least one cooling pipe, a flow direction of liquid in the cooling pipe is defined as a first direction, the cooling pipes are arranged in a tree-like structure from a side to an opposite side along the first direction, a side of the tree-like structure is a tree-like beginning, and an opposite side thereof is a tree-like end; a pipe inlet, in which the pipe inlet is in communication with a side of the tree-like beginning of the cooling pipe in the cooling pipe set; and a pipe outlet, in which the pipe outlet is in communication with a side of the tree-like end of the cooling pipe in the cooling pipe set.

## Description

The present disclosure claims the priority of Chinese Patent Application No. 2023216687013 filed on June 28, 2023 and Chinese Patent Application No. 2023107772736 filed on June 28, 2023 before CNIPA. All the above are hereby incorporated by reference in their entirety.

### TECHNICAL FIELD

The present disclosure relates to the technical field of batteries and, particularly, to a cooling pipe structure, a liquid cooling plate and a battery system.

### BACKGROUND

With the rapid development in the field of electric vehicles, the use of power batteries is increasingly widespread. Power battery generates large heat in the process of charging and discharging, causing high temperature inside the battery pack and affecting the service life of the battery, or even leading to thermal runaway and safety accidents. Therefore, thermal management and thermal safety of power batteries has received increasingly more attention.

The requirements for fast charging of the cells in the existing battery system are getting increasingly high, and it is difficult to control the heat generation of the high-rate cells. In order to improve the cooling effect, the existing battery system is usually provided with a liquid cooling plate on the top or bottom surface of the cells, and the liquid cooling plate is provided with a cooling pipe.

The cooling pipes of the prior art are typically designed in a symmetrical arrangement or in a spiral design, which is unfavorable for battery systems with a relatively long length of battery modules. There is a significant temperature difference between the cells on the left side and the right side of the same horizontal pipe, which is prone to uneven cooling of the cells.

### SUMMARY

As a first aspect, provided in the present application is a cooling pipe structure, including: a cooling pipe set, wherein the cooling pipe set comprises at least one cooling pipe, a flow direction of liquid in the cooling pipe is defined as a first direction, the cooling pipes are arranged in a tree-like structure from a side to an opposite side along the first direction; a pipe inlet, wherein the pipe inlet is in communication with a side of a tree-like beginning of the cooling pipe in the cooling pipe set; and a pipe outlet, in which the pipe outlet is in communication with a side of a tree-like end of the cooling pipe in the cooling pipe set.

As a second aspect, provided in the present application is a liquid cooling plate, including a cooling pipe structure and a liquid cooling plate body, in which the cooling pipe set is abutted against or embedded into one or both side surfaces of the liquid cooling plate body.

As a third aspect, provided in the present application is a battery system, including a cell housing, a set of cells, and a liquid cooling plate, in which the set of cells and the liquid cooling plate body are provided in the cell housing, and the liquid cooling plate body is positioned on a top or bottom of the set of cells.

1. The cooling pipes are designed as a tree-like structure, which increases the number of cooling pipes level by level, so as to effectively deal with the problem of gradual temperature rise of coolant in the cooling pipes, improve the heat transfer effectiveness by increasing the heat transfer area, and balance the temperature difference of the overall heat transfer.

2. The number of levels and number of cooling pipes may be increased according to the actual situation in order to meet the comprehensive coverage of heat exchange and increase the heat exchange area.

3. The combination of cooling pipe and liquid cooling plate may form an even heat exchange plate, and the flexible design of cooling pipe is conducive to the balance of the overall heat exchange temperature of the heat exchange plate and reduce the temperature difference.

4. Liquid cooling plate and serpentine liquid cooling pipe are used to achieve three-side liquid cooling heat transfer, which greatly improves the heat transfer efficiency and provides better temperature control.

### BRIEF DESCRIPTION OF THE DRAWINGS

Fig. 1 is a schematic structural diagram of the cooling pipe in an embodiment of the present application;
Fig. 2 is a schematic structural diagram of the liquid cooling plate in an embodiment of the present application;
Fig. 3 is a schematic structural diagram of the battery system in an embodiment of the present application;
Fig. 4 is a schematic structural diagram of the liquid cooling plate connecting structure in an embodiment of the present application;
Fig. 5 is a schematic structural diagram in a side view of the battery system in an embodiment of the present application;
Fig. 6 is a schematic structural diagram in a perspective view of the battery system in an embodiment of the present application.

The meanings of the reference numerals are as follows: 1 cooling pipe set; 11 cooling pipe; 111 tree-like beginning; 112 tree-like intermediate; 113 tree-like end; 2 pipe outlet; 3 pipe inlet; 4 outlet main; 5 inlet main; 6 second surrounding pipe; 7 first surrounding pipe; 8 third surrounding pipe; 9 cooling plate body; 10 lateral liquid cooling plate; 101 liquid outlet; 102 liquid inlet; 103 liquid outlet pipe; 104 liquid inlet pipe; 20 converging pipe; 30 diverting pipe.

### DETAILED DESCRIPTION

Conventional cooling pipes are typically coiled curved pipes or serpentine pipes. The longer the coolant in the cooling pipe flows and exchanges heat as it enters the cooling pipe, the higher the temperature of the coolant becomes, and therefore the heat exchange effect is not optimal for the heat generating devices positioned in the rear half of the cooling pipe.

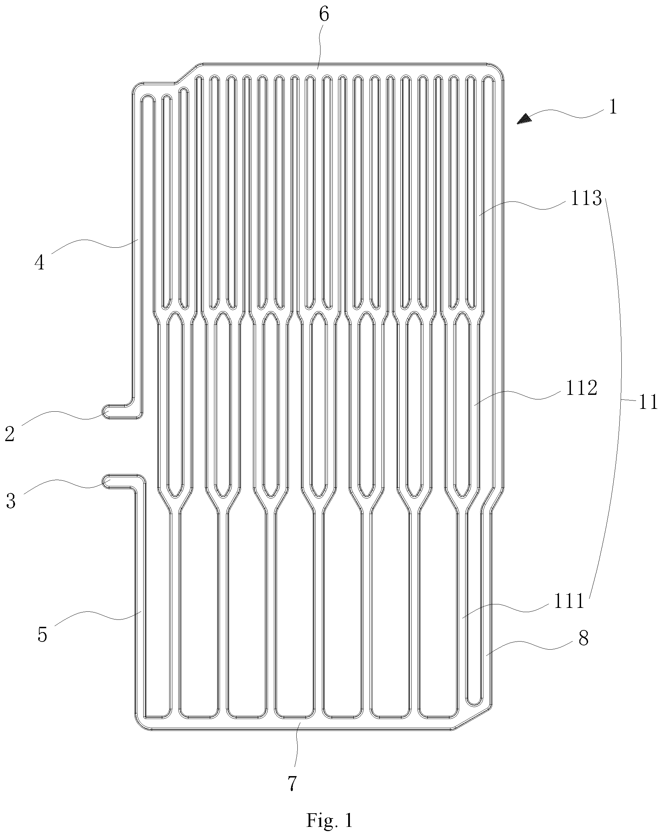

In embodiment 1 of the present application, referring to Fig. 1, disclosed is a cooling pipe structure, including a cooling pipe set 1, a pipe inlet 3, and a pipe outlet 2, in which the cooling pipe set 1 includes at least one cooling pipe 11, and a flow direction of liquid in the cooling pipe 11 is defined as a first direction. It is to be understood that, the first direction is the predominant flow direction in the cooling pipe 11. A partial turning structure may be presented in the cooling pipe 11, however, the predominant flow direction remains unchanged. In the present embodiment 1, the first direction is a length direction of the cooling pipe set, the cooling pipes 11 are arranged in a tree-like structure from a side to an opposite side along the first direction, the tree-like structure contains at least two levels, the tree-like structure includes a tree-like beginning 111 and a tree-like end 113 when the tree-like structure contains two levels, the tree-like structure includes a tree-like beginning 111,a tree-like intermediate 112, and a tree-like end 113 when the tree-like structure contains more than three levels, a side of the tree-like structure is the tree-like beginning 111, an opposite side thereof is a tree-like end 113, and the tree-like intermediate 112 is positioned between the tree-like beginning 111 and the tree-like end 113. The pipe inlet 3 is in communication with a side of the tree-like beginning 111 of the cooling pipe 11 in the cooling pipe set 1, and the pipe outlet 2 is in communication with a side of the tree-like end 113 of the cooling pipe 11 in the cooling pipe set 1. The coolant temperature inside the cooling pipes 11 increases with the increase of the length of the pipes, and the number of cooling pipes 11 is increased level by level by designing the cooling pipe set 1 with a tree-like structure distribution of the cooling pipes 11. The number of levels of the tree-like structure is increased according to the area of heat exchange required to ensure that the heat exchange in the rear half of the cooling pipe 11 is more intensive, thereby gradually increasing the area in contact with the heat generating members, effectively addressing the gradual temperature rise in the coolant in the cooling pipe 11, increasing the area of the heat exchange, reducing the temperature difference between the cells, controlling the temperature of the heat generating members in a reasonable range, achieving the evenness of heat exchange, and conducive to increasing the service life of the heat generating members.

In an implementation, when the cooling pipe set 1 includes only one cooling pipe 11, the cooling pipe 11 is connected to the pipe inlet 3, respective sides of the tree-like ends 113 of the cooling pipes 11 are converged to one pipe and connected to the pipe outlet 2, the coolant passed through the pipe inlet 3 first flows through the tree-like beginning 111 of the cooling pipe 11, then flows through the tree-like end 113 of the cooling pipe 11, and finally flows out of the pipe outlet 2 to achieve the heat exchange effect of the coolant.

In an implementation, when the cooling pipe set 1 includes two or more cooling pipes 11, all cooling pipes 11 are positioned on a same horizontal plane, and all cooling pipes 11 in the cooling pipe set 1 are kept horizontal, so that the cooling pipe set 1 forms a cooling plane, tree-like beginnings 111 of all cooling pipes 11 are connected to an inlet main 5, the inlet main 5 is in communication with the pipe inlet 3, tree-like ends 113 of all cooling pipes 11 are connected to an outlet main 4, and the outlet main 4 is in communication with the pipe outlet 2. The provision of the inlet main 5 and the outlet main 4 enables each cooling pipe 11 to be relatively fixed between the inlet main 5 and the outlet main 4 to form a plane. The coolant passed through the pipe inlet 3 first flows into the inlet main 5, then disperses to the tree-like beginnings 111 of each cooling pipe 11, then flows through the tree-like ends 113 of each cooling pipe 11, and finally passes into the outlet main 4 and out of the pipe outlet 2 to achieve the heat exchange effect of the coolant.

In an implementation, when the cooling pipe set 1 includes two or more cooling pipes 11, all cooling pipes are positioned on different horizontal plane, which allows the cooling pipe set 1 to dissipate heat on multiple surfaces of the heat generating object, so that each cooling pipe 11 in the cooling pipe set 1 may be changed adaptively according to the shape of the surface of the heat generating object. For example, when the heat generating object is cylindrical, the inlet main 5 may be provided along a circumference of a circle on a side of the cylinder, and the outlet main 4 may be provided along a circumference of a circle on an opposite side of the cylinder. All cooling pipes 11 are arranged in a spaced apart arrangement between the inlet main 5 and the outlet main 4, all cooling pipes 11 in the cooling pipe set 1 are kept horizontal, and the cooling pipes 11 are connected to the inlet main 5 and the outlet main 4 vertically, or in an angle so that all cooling pipes 11 are coiled along the side surface of the cylinder to achieve the heat exchange effect. When the heat generating object is a prism, the inlet main 5 may be provided along a periphery of a polygonal plane on a side of the prism, and the outlet main 4 may be provided along a periphery of a polygonal plane on an opposite side of the prism. All cooling pipes 11 are arranged in a spaced apart arrangement between the inlet main 5 and the outlet main 4, and all cooling pipes 11 in the cooling pipe set 1 are kept horizontal, so as to cover at least one lateral surface of the prism to achieve the heat exchange effect. When the heat generating object is a truncated conical prism or a truncated cone, the inlet main 5 and the outlet main 4 are still provided on peripheries of both end surfaces. All cooling pipes 11 are arranged in a spaced apart arrangement between the inlet main 5 and the outlet main 4, and all cooling pipes are not horizontal in this case, so as to cover at least a part of lateral surfaces of the truncated conical prism or truncated cone to achieve the heat exchange effect.

The number of levels of the tree-like structure in the cooling pipes 11 is preferably two, three or four, and the number of pipes in each level of the tree-like structure is doubled that in the prior level of the tree-like structure. Therefore, a distance between two tree-like beginnings111 of the cooling pipes 11 needs to be greater than or equal to a width range of the tree-like ends 113, so as to ensure a smooth arrangement between the cooling pipes 11. Therefore, the tree-like structure is a binary tree-like structure, and branches of each level of tree-like structure are parallel to each other, so as to prevent from diverting too much flow, which may lead to the cooling pipes 11 positioned on a side of the tree-like beginning 111 being spaced too far apart and result in a poor heat exchange effect.

In an implementation, when there are a plurality of cooling pipes 11 that positioned on a same horizontal plane, the distance between the tree-like beginnings 111 is farther apart due to the greater number of levels in the tree-like structure. In order to ensure a larger heat transfer area for the cooling pipes 11 in a horizontal plane, a third surrounding pipe 8 is provided between the outlet main 4 and the inlet main 5, the third surrounding pipe 8 is positioned at ends of the outlet main 4 and the inlet main 5, and positioned at edges of the cooling pipe set 1, so as to provide supplementary heat exchange to areas where the tree-like beginning 111 is not able to exchange heat, which increases an overall heat exchange area of the cooling pipe set 1. In some implementations, the pipe inlet 3 and pipe outlet 2 typically need to be designed in a centralized manner, so that the occupation of overall area of the cooling pipe set 1 may be decreased. Therefore, a side of the inlet main 5 is further provided with a first surrounding pipe 7, a side of the outlet main 4 is further provided with a second surrounding pipe 6, the third surrounding pipe 8 is provided between an opposite side of the inlet main 5 and an opposite side of the outlet main 4, the first surrounding pipe 7 and the second surrounding pipe 6 are provided around a lateral edge of the cooling pipe set 1, an end of the first surrounding pipe 7 is in communication with the pipe inlet 3, and an end of the second surrounding pipe 6 is in communication with the pipe outlet 2, so that the pipe inlet 3 and the pipe outlet 2 may be designed in a centralized manner, and the occupation of overall area of the cooling pipe set 1 may be decreased, which leads to an increase of the area of heat exchange.

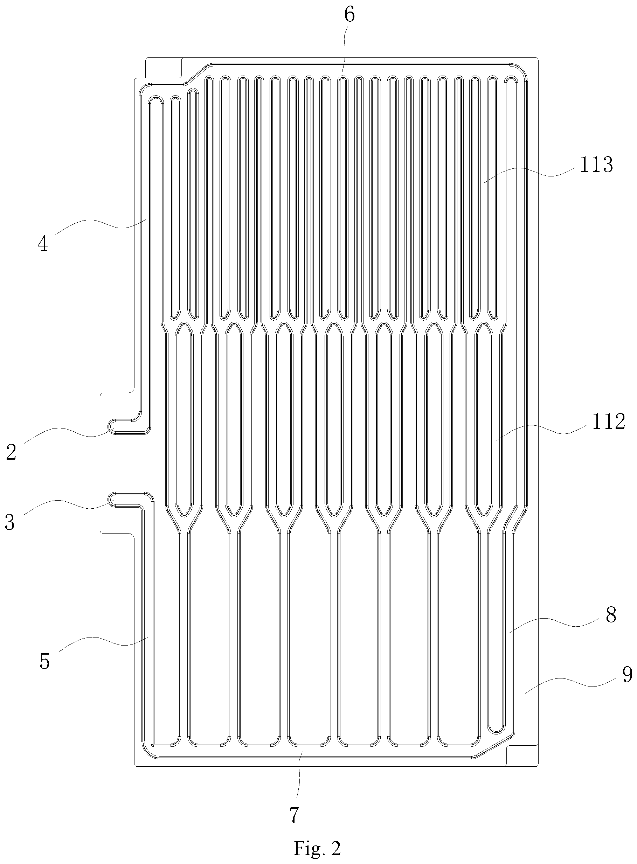

Referring to Fig. 2, related in the present application is further a liquid cooling plate, including a liquid cooling plate body 9 and any one of the cooling pipe structure mentioned above, in which the cooling pipe set 1 is abutted against or embedded into at least one side surface of the liquid cooling plate body 9, so that the heat exchange area of the liquid cooling plate from one side to the other side is gradually increased to address a gradual increase in the temperature of the coolant in the cooling pipe 11 on the cooling plate, which is conducive to balancing the temperature of the liquid cooling plate from one side to the other side in the horizontal direction.

It should be noted that the liquid cooling plate body 9 may be a coplanar flat plate structure for exchanging heat for a single-sided of the heat generating source, or a non-coplanar bent plate structure for exchanging heat for at least two sides of the heat generating source, or a plurality of liquid cooling plates may be assembled to form a cooling housing for exchanging heat for the heat generating source in a comprehensive manner.

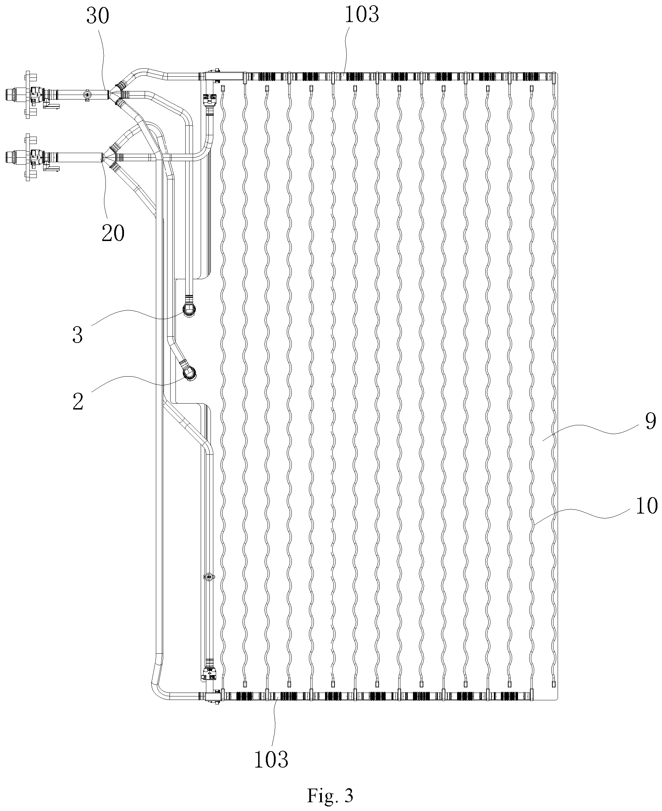

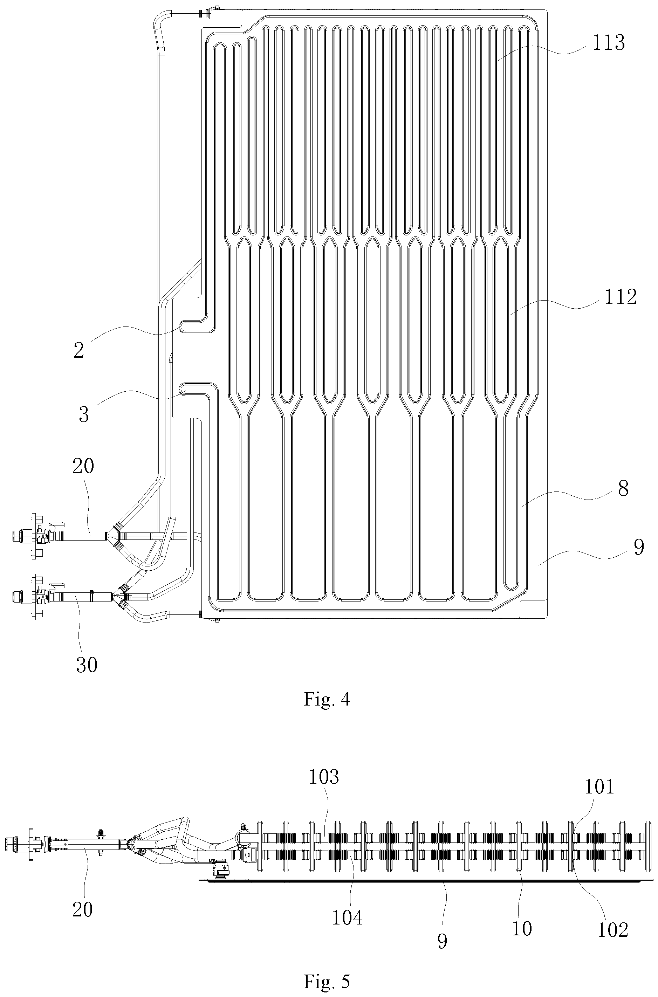

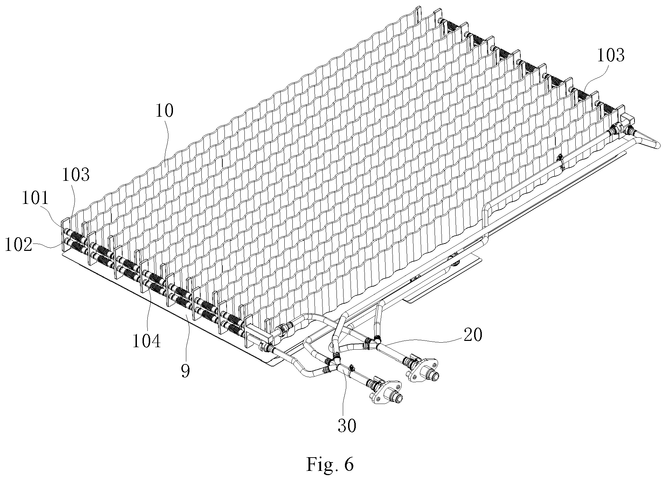

Referring to Figs. 3-6, related in the present application is further a battery system, including a cell housing, a set of cells, and a liquid cooling plate. In the embodiment, the liquid cooling plate body 9 is a coplanar flat plate, the set of cells and the liquid cooling plate body 9 are provided in the cell housing, and the liquid cooling plate body 9 is positioned on a top or bottom of the set of cells, which is conducive to the heat exchange on the top or bottom of the set of cells, ensuring an even heat exchange of the set of cells. A flow direction of the cooling pipe 11 on the liquid cooling plate body 9 is identical to a length direction of the cell housing, which is conducive to the arrangement of the tree-like structure to achieve an even heat exchange. It should be noted that, in other implementations, the liquid cooling plate body 9 may further be assembled on six sides of the set of cells to achieve full heat exchange.

The set of cells includes a plurality of rows of cells provided in a linear arrangement, both sides of each row of cells are provided with lateral liquid cooling plates 10, the lateral liquid cooling plates 10 are abutted against side walls of the cells, and an interior of the lateral liquid cooling plates 10 is in communication with an interior of the liquid cooling plate body 9. Each lateral liquid cooling plate 10 includes a liquid inlet 102 and a liquid outlet 101, the liquid inlets 102 of the lateral liquid cooling plates 10 are connected in series to form a liquid inlet pipe 104, and the liquid outlets 101 of the lateral liquid cooling plates 10 are connected in series to form a liquid outlet pipe 103. In some implementations, there may be a plurality of liquid inlet pipes 104 and liquid outlet pipes 103, which are assembled on both ends of the lateral liquid cooling plates 10 respectively.

When filling coolant, the coolant is sent to each liquid inlet pipe 104 and the pipe inlet 3 of the liquid cooling plate body 9 through the diverting pipe 30, and then flows out through each liquid outlet pipe 103 and the pipe outlet 2 of the liquid cooling plate body 9 after flowing through the lateral liquid cooling plate 10 and the liquid cooling plate body 9, respectively, and is finally aggregated and discharged through the converging pipe 20. The combination of the lateral liquid cooling plate 10 and the liquid cooling plate body 9 may achieve three-side cooling on a top or bottom surface of the cells as well as on both sides of the cells, greatly increasing the heat exchange area between the cells and the coolant, and improving the charging safety of the cells when charging at a high rate. In the embodiment, the cells are cylindrical, and the lateral liquid cooling plate 10 are designed as a serpentine liquid cooling plate, which is conducive to adhering to the side wall surface of the cells and improving the heat exchange area. In other implementations, the structure of the lateral liquid cooling plate 10 varies with the shapes of the cells.

It should be noted that the direction of the above filling may be changed to achieve reverse filling.

Each level of the tree-like structure in the cooling pipe 11 inside the liquid cooling plate body 9 covers 6-9 cells, the number of cells being cooled in each level is not too many, which avoids severe uneven cooling issues that may result from the decline in heat exchange efficiency. In the embodiment, the tree-like structure contains three levels.

When the liquid cooling plate body 9 is positioned on a top of the set of cells, the cooling pipes 11 are in contact with and exchange heat with an aluminum plate above the cells. The stamped liquid cooling plate body 9 at the top of the cells is in direct contact with the welded aluminum plate above the cells, and when the aluminum plate generates excessive heat during high rate charging, the liquid cooling plate body 9 at the top exchanges heat with the aluminum plate, while the aluminum plate is welded to the poles of the cells, thereby cooling the cells.

In summary, the present application provides a cooling pipe structure, a liquid cooling plate and a battery system with the following technical effects:
1. The cooling pipes 11 are designed as a tree-like structure, which increases the number of cooling pipes 11 level by level, so as to effectively deal with the problem of gradual temperature rise of coolant in the cooling pipes 11, and improve the heat transfer effectiveness by increasing the heat transfer area, in order to balance the temperature difference of the overall heat transfer.
2. The number of levels and number of cooling pipes 11 may be increased according to the actual situation in order to meet the comprehensive coverage of heat exchange and increase the heat exchange area.
3. The combination of cooling pipe 11 and liquid cooling plate may form an even heat exchange plate, and the flexible design of cooling pipe is conducive to the balance of the overall heat exchange temperature of the heat exchange plate and reduce the temperature difference.
4. Liquid cooling plate and serpentine liquid cooling pipe are used to achieve three-side liquid cooling heat transfer, which greatly improves the heat transfer efficiency and provides better temperature control.

## Claims

1. A cooling pipe structure, comprising:
a cooling pipe set (1), wherein the cooling pipe set (1) comprises at least one cooling pipe (11), a flow direction of liquid in the cooling pipe (11) is defined as a first direction, the cooling pipes (11) are arranged in a tree-like structure from a side to an opposite side along the first direction, a side of the tree-like structure is a tree-like beginning (111), and an opposite side thereof is a tree-like end (113);
a pipe inlet (3), wherein the pipe inlet (3) is in communication with a side of the tree-like beginning (111) of the cooling pipe (11) in the cooling pipe set (1); and
a pipe outlet (2), wherein the pipe outlet (2) is in communication with a side of the tree-like end (113) of the cooling pipe (11) in the cooling pipe set (1).

2. The cooling pipe structure according to claim 1, wherein, when the cooling pipe set (2) comprises two or more cooling pipes (11), a side of the cooling pipe set (1) is connected with an inlet main (5) an opposite side of the cooling pipe set (1) is connected with an outlet main (4), the pipe inlet (3) is in communication with the inlet main (5), and the pipe outlet (2) is in communication with the outlet main (4).

3. The cooling pipe structure according to claim 2, wherein cooling pipes (11) in the cooling pipe set (1) are positioned on a same level, and cooling pipes (11) are arranged in a spaced apart arrangement between the inlet main (5) and the outlet main (4).

4. The cooling pipe structure according to claim 2, wherein at least two cooling pipes (11) in the cooling pipe set (1) are not coplanar, and cooling pipes (11) are arranged in a spaced apart arrangement between the inlet main (5) and the outlet main (4).

5. The cooling pipe structure according to any one of claims 1-4, wherein the cooling pipe (11) comprises at least two levels of the tree-like structure, a tree-like intermediate is further provided between the tree-like beginning (111) and the tree-like end (113) of the tree-like structure when there are more than two levels of the tree-like structure.

6. The cooling pipe structure according to claim 5, wherein the tree-like structure is a binary tree-like structure, and branches of each tree-like structure are parallel to each other.

7. The cooling pipe structure according to any one of claims 2-4, wherein a side of the inlet main (5) is further provided with a first surrounding pipe (7), a side of the outlet main (4) is further provided with a second surrounding pipe (6), a third surrounding pipe (8) is provided between an opposite side of the inlet main (5) and an opposite side of the outlet main (4), and the first surrounding pipe (7), the second surrounding pipe (6), and the third surrounding pipe (8) are all provided around edges of the cooling pipe set (1).

8. A liquid cooling plate, comprising a cooling pipe structure as claimed in any one of claims 1-7, and a liquid cooling plate body (9), wherein the cooling pipe set (1) is abutted against or embedded into at least one side surface of the liquid cooling plate body (9).

9. A battery system, comprising a cell housing, a set of cells, and a liquid cooling plate as claimed in claim 8, wherein the set of cells and the liquid cooling plate body (9) are provided in the cell housing, and the liquid cooling plate body (9) is positioned on a top or bottom of the set of cells.

10. The battery system according to claim 9, wherein the set of cells comprises a plurality of rows of cells provided in a linear arrangement, both sides of each row of cells are provided with lateral liquid cooling plates (10), the lateral liquid cooling plates (10) are abutted against side walls of the cells, and an interior of the lateral liquid cooling plates (10) is in communication with an interior of the liquid cooling plate body (9).

11. The battery system according to claim 10, wherein a flow direction of the cooling pipe (11) on the liquid cooling plate body (9) is identical to a length direction of the cell housing.

12. The battery system according to claim 10, wherein each level of the tree-like structure covers 6-9 cells.

13. The battery system according to claim 10, wherein, when the liquid cooling plate body (9) is positioned on a top of the set of cells, the cooling pipes (11) are in contact with an aluminum plate above the cells for heat exchange.

14. The battery system according to claim 10, further comprising a converging pipe (20) and a diverting pipe (30), wherein the diverting pipe (30) is arranged to divert a coolant into a lateral liquid cooling plate (10) and the liquid cooling plate body (9), and the converging pipe (20) is arranged to converge and discharge the coolant in the lateral liquid cooling plate (10) and the liquid cooling plate body (9).
